# EUROPÄISCHE PATENTANMELDUNG

(11) **EP 3 878 690 A1**
(43) Veröffentlichungstag der Anmeldung: **15.09.2021**
(21) Anmeldenummer: 20162618.1
(22) Anmeldetag: 12.03.2020
(51) Int. Cl.: B60Q 1/50, B60Q 1/52, B60Q 1/26, F21S 43/14, F21S 43/15, F21S 43/19, F21S 43/237, F21S 43/245, F21S 43/20, F21S 43/27

(54) **KRAFTFAHRZEUG**

(71) Anmelder: ZKW Group GmbH, 3250 Wieselburg (AT)
(72) Erfinder: Wagner, Florian, 3300 Winklarn (AT); Mitterlehner, Stefan, 3240 Mank (AT); Salzer, Michael, 3261 Zarnsdorf (AT); Brunner, Michael, 3650 Pöggstall (AT)
(74) Vertreter: Patentanwaltskanzlei Matschnig & Forsthuber OG

(57) **Zusammenfassung**

Kraftfahrzeug (10), welches in einem selbstfahrenden Zustand betreibbar ist, wobei das Kraftfahrzeug ein Beleuchtungssystem (50) zum Erzeugen Lichtsignalbotschaften an einzelne Verkehrsteilnehmer umfasst, welches eine Leuchteinrichtung (100) und eine Steuereinrichtung umfasst, wobei die Leuchteinrichtung (100)
- zumindest eine Lichtquelle (110),
- eine Streuoptik (120), welche eingerichtet ist, das von der Lichtquelle (110) emittierbare Licht durch Brechung zu streuen, um einen diffusen Leuchteindruck der Streuoptik (120) zu ermöglichen,
- ein Trägerelement (130), an welchem die Lichtquelle (110) angeordnet ist, wobei das Trägerelement (130) einen Kabelkanal (140) zur Führung einer elektrischen Leitung und ein erstes Befestigungsmittel (150) zur Befestigung des Trägerelements (130) an dem Kraftfahrzeug umfasst,
- eine Abdeckung (160), welche mittels einem zweiten Befestigungsmittel (170) an dem Trägerelement (130) befestigbar ist, wobei die Abdeckung (160) in Kombination mit dem Trägerelement (130) eingerichtet ist, die Streuoptik (120) zu halten, umfasst,
und wobei die Leuchteinrichtung (100) derart um das Kraftfahrzeug umlaufend angeordnet ist, dass bei Einschaltung der einen Leuchteinrichtung (100) die Streuoptik (120) als optisch durchgehend leuchtender Leuchtring wahrnehmbar ist.

## Beschreibung

Die Erfindung betrifft ein Kraftfahrzeug, welches in einem selbstfahrenden Zustand betreibbar ist, wobei das Kraftfahrzeug ein adaptives Beleuchtungssystem zum Erzeugen von adaptiven Lichtsignalbotschaften an einzelne Verkehrsteilnehmer umfasst, welches Beleuchtungssystem zumindest eine Leuchteinrichtung und eine Steuereinrichtung zur Steuerung der zumindest einen Leuchteinrichtung umfasst.

Die Kommunikation zwischen anderen Verkehrsteilnehmern und von Menschen gelenkten Fahrzeugen erfolgt grundsätzlich über Blickkontakt, Gesten oder visuelle/ auditive (Warn)Signale wie Lichthupe oder Hupe.

Die Beleuchtungsfunktionen von Fahrzeugen als sicherheitsrelevante Maßnahmen und als Kommunikationsmittel zur Kommunikation mit anderen Verkehrsteilnehmern wird zunehmend an Bedeutung gewinnen, wenn Fahrzeuge nicht mehr von einem Menschen gelenkt werden, sondern vollständig autonom oder teilweise autonom, z.B. über einen autonomen, den Fahrer entlastenden Selbstfahrmodus, agieren. Die Beleuchtungsfunktionen werden sich dann nicht mehr an der Wahrnehmung der menschlichen Verkehrsteilnehmer orientieren, sondern an den Anforderungen für technische Einrichtungen (Sensoren, Kamerasysteme, etc.) des selbstfahrenden Fahrzeugs. Diese technischen Einrichtungen können wünschenswerter Weise eine vorliegende Umfeldsituation zuverlässig erkennen und bewerten, sodass auf Grundlage der erfassten Situation, insbesondere einer Gefahrensituation, entsprechende Kommunikationssignale an die anderen Verkehrsteilnehmer wie Fußgänger, Radfahrer und nicht-autonome Fahrzeuge übermittelt werden. Eine besondere Herausforderung hinsichtlich des Einsatzes autonomer Fahrzeuge, stellen dabei auch Verkehrsteilnehmer dar, welche sich nicht aktiv auf den Verkehr konzentrieren oder eine Verkehrssituation falsch einschätzen, beispielsweise Fußgänger und Kinder. Diese Verkehrsteilnehmer können Fahrzeuge oder deren Beleuchtungsfunktionen leicht übersehen.

Der Begriff "selbstfahrendes Fahrzeug" (hierin auch als "autonomes Fahrzeug" bezeichnet) bezieht sich auf Fahrzeuge, insbesondere auf Kraftfahrzeuge (KFZ), die dazu eingerichtet sind, auch ohne Eingriff eines Fahrers, typischerweise Computer-gesteuert, bewegt werden zu können. Das selbstfahrende Fahrzeug kann beispielsweise vollständig autonom sein oder es kann ein Fahrzeug sein, das von einem aktiven Fahrer-betriebenen Fahrmodus zur Entlastung des Fahrers in einen autonomen Selbstfahrmodus umschaltbar ist. Das selbstfahrende Fahrzeug kann einspurig oder zweispurig, vorzugsweise zweispurig, sein. Beispielsweise kann es sich um einen Personenkraftwagen (PKW), einen Lastkraftwagen (LKW) oder um ein landwirtschaftliches Fahrzeug wie einen Traktor oder dergleichen handeln. Insbesondere handelt es sich bei dem selbstfahrenden Fahrzeug um einen PKW oder einen LKW.

Der Begriff "Verkehrsteilnehmer" bezieht sich auf alle sich typischerweise im Straßenverkehr befindlichen Objekte, wie andere Fahrzeuge und menschliche Verkehrsteilnehmer, wie Fußgänger oder Radfahrer.

Es ist eine Aufgabe der Erfindung, ein verbessertes Kraftfahrzeug bereitzustellen.

Diese Aufgabe wird dadurch gelöst, dass die zumindest eine Leuchteinrichtung
- zumindest eine Lichtquelle,
- zumindest einer der Lichtquelle zugeordnete Streuoptik, welche eingerichtet ist, das von der zumindest einen Lichtquelle emittierbare Licht durch Brechung zu streuen, um einen diffusen Leuchteindruck der Streuoptik zu ermöglichen,
- ein Trägerelement, an welchem die zumindest eine Lichtquelle angeordnet ist, wobei das Trägerelement einen Kabelkanal zur Führung zumindest einer elektrischen Leitung, welche die zumindest eine Lichtquelle mit der Steuereinrichtung verbindet, und ein erstes Befestigungsmittel zur Befestigung des Trägerelements bzw. der Leuchteinrichtung an dem Kraftfahrzeug umfasst,
- eine Abdeckung, welche mittels einem zweiten Befestigungsmittel an dem Trägerelement befestigbar ist, wobei die Abdeckung in Kombination mit dem Trägerelement in einem an dem Trägerelement befestigten Zustand eingerichtet ist, die Streuoptik zu halten, umfasst,

und wobei die zumindest eine Leuchteinrichtung derart um das Kraftfahrzeug umlaufend angeordnet ist, dass bei Einschaltung der zumindest einen Leuchteinrichtung die Streuoptik als optisch durchgehend leuchtender Leuchtring wahrnehmbar ist.

Es kann vorgesehen sein, dass die Leuchteinrichtung horizontal umlaufend um das Kraftfahrzeug angeordnet ist.

Unter dem Begriff "horizontal umlaufend" wird verstanden, dass sich die zumindest eine Leuchteinrichtung sowohl über die beiden Längsseiten als auch die beiden Breitseiten des Kraftfahrzeuges erstreckt, beispielsweise entlang der Dachreling. Dabei muss die zumindest eine Leuchteinrichtung nicht genau horizontal zur jeweiligen Fahrbahn, auf welcher sich das Kraftfahrzeug (im Betrieb) befindet, ausgerichtet sein, sondern kann auch Abstufungen aufweisen, zu deren Verbindung wiederum ein Abschnitt der zumindest einen Leuchteinrichtung in einem Winkel zur Fahrbahn bzw. nicht mehr horizontal verläuft.

Unter "horizontal umlaufend" wird nicht verstanden, dass die zumindest eine Leuchteinrichtung über die Bodenplatte und über das Dach des Kraftfahrzeuges verläuft, was einer vertikal umlaufenden Anordnung entsprechen würde.

Die zumindest eine Leuchteinrichtung kann beispielsweise Teil der Karosserie des Kraftfahrzeuges sein, beispielsweise als Ersatz für Zierleisten, die üblicherweise an den Kraftfahrzeugtüren unterhalb der Fenster vorhanden sind oder auch die Dachreling des Kraftfahrzeuges.

Die zumindest eine Leuchteinrichtung und die Steuereinrichtung können über das bereits vorhandene Kraftfahrzeugbordnetz betrieben werden.

Es kann vorgesehen sein, dass das Trägerelement eine Längserstreckung aufweist, wobei sich der Kabelkanal entlang der Längserstreckung des Trägerelements erstreckt.

Es kann vorgesehen sein, dass das Beleuchtungssystem zumindest zwei oder mehrere Leuchteinrichtungen umfasst, wobei die zumindest zwei oder mehreren Leuchteinrichtungen derart um das Kraftfahrzeug umlaufend angeordnet sind, dass bei gleichzeitiger Einschaltung jeder Leuchteinrichtung die Streuoptiken der Leuchteinrichtungen als optisch durchgehend leuchtender Leuchtring wahrnehmbar sind.

Bei Vorhandensein von zwei oder mehr Leuchteinrichtungen können die Leuchteinrichtungen zueinander einen physischen Abstand aufweisen, solange sie bei Einschaltung jeder Lichtquelle, beispielsweise Leuchtdiode (LED), einen als optisch durchgehend leuchtenden Leuchtring bilden.

In diesem Zusammenhang ist unter "durchgehend" zu verstehen, dass ein geschlossener Leuchtring gebildet wird, d.h. dass im eingeschalteten Zustand der Lichtquellen der Leuchtring optisch durchgehend bzw. geschlossen umlaufend um das Kraftfahrzeug erscheint bzw. wahrnehmbar ist. Dabei können die Leuchteinrichtungen physisch einen Abstand aufweisen, wie oben erwähnt. Es kann jedoch auch vorgesehen sein, dass die Leuchteinrichtungen auch physisch einen durchgehenden bzw. geschlossenen Leuchtring bilden.

Bei zwei oder mehrere Leuchteinrichtungen können diese derart zueinander bzw. aneinander angeordnet sein, dass sich der Kabelkanal einer Leuchteinrichtung an den Kabelkanal der unmittelbar benachbarten Leuchteinrichtung anschließt, sodass ein durchgehender Kabelkanal ermöglicht wird.

Es kann vorgesehen sein, dass die zumindest eine Lichtquelle als LED ausgebildet ist.

Es kann vorgesehen sein, dass die zumindest eine LED auf einer Leiterplatte angeordnet ist, welche Leiterplatte an dem Trägerelement angeordnet ist.

Es kann vorgesehen sein, dass die zumindest eine Lichtquelle als Lichtleiter mit einer LED ausgebildet ist, in welchen Lichtleiter Licht der LED einspeisbar ist.

Es kann vorgesehen sein, dass das erste Befestigungsmittel Schrauben und zugehörige Bohrungsöffnungen umfasst, wobei die Bohrungsöffnungen an dem Trägerelement angeordnet sind, über welche Bohrungsöffnungen das Trägerelement mittels der Schrauben an dem Kraftfahrzeug befestigbar ist.

Es kann vorgesehen sein, dass das zweite Befestigungsmittel Schrauben und zugehörige Bohrungsöffnungen umfasst, wobei die Bohrungsöffnungen an dem Trägerelement angeordnet sind, über welche Bohrungsöffnungen die Abdeckung mittels der Schrauben an dem Trägerelement befestigbar ist.

Es kann vorgesehen sein, dass die zumindest eine Lichtquelle der zumindest einen Leuchteinrichtung durch die Steuereinrichtung angesteuert und aktiviert sind, wenn sich das Kraftfahrzeug in dem selbstfahrenden Zustand befindet.

Es kann vorgesehen sein, dass die zumindest zwei oder mehreren Leuchteinrichtungen unabhängig voneinander durch die Steuereinrichtung ansteuerbar sind.

Es kann vorgesehen sein, dass das Kraftfahrzeug zumindest eine Sensoreinrichtung umfasst, welche eingerichtet ist, in der Umgebung des Kraftfahrzeugs befindliche Verkehrsteilnehmer jeweils einzeln zu erfassen und Änderungen der Relativposition zwischen dem Kraftfahrzeug und den einzelnen Verkehrsteilnehmern zu berücksichtigen.

Es kann vorgesehen sein, dass die zumindest eine Sensoreinrichtung eine bildsensorgestützte Kamera, ein Nahfeld-Infrarotsensor oder ein Ultraschallsensor ist.

Die zumindest eine Sensoreinrichtung zum einzelnen Erfassen anderer in der Fahrzeugumgebung befindlicher Verkehrsteilnehmer kann beispielsweise als bildsensorgestützte Kamera, Infrarotsensor und/oder Radarscanner realisiert sein. Darüber hinaus können auch LiDAR oder Ultraschallsysteme zum Einsatz kommen. Derartige Vorrichtungen sind aus dem Stand der Technik bekannt und können auch in Kombination miteinander eingesetzt werden, um die verschiedenen Vorteile zu nutzen. Die bildsensorgestützte Kamera kann die Funktionen einer normalen Kamera, einer Nachtsicht-Kamera und/oder einer Nebelsichtkamera umfassen, sodass bei allen Lichtverhältnissen und Witterungen eine zuverlässige und qualitativ ausreichende Erfassung der Fahrzeugumgebung und der beteiligten Verkehrsteilnehmer möglich ist. Es kann vorgesehen sein, dass die Kamera eine zusätzliche Infrarot-Kamerafunktion besitzt, um Menschen und Tiere auf Grundlage ihrer Körperwärme noch besser erfassen zu können.

Es kann vorgesehen sein, dass die Sensoreinrichtung bei Erfassen zumindest eines Verkehrsteilnehmers ein Signal an die Steuereinrichtung übermittelt, sodass die Steuereinrichtung jene Leuchteinrichtung ansteuert, welche dem zumindest einen erfassten Verkehrsteilnehmer am nächsten sind.

Es kann vorgesehen sein, dass die angesteuerten Lichtquellen ein farbiges Licht, beispielweise grünes und/oder rotes Licht, abstrahlen.

Es kann ferner vorgesehen sein, dass die Lichtfarbe der von den Lichtquellen erzeugten Lichtverteilung, die dem jeweils erfassten Verkehrsteilnehmer übermittelt wird, den Verkehrsteilnehmer darüber informiert, wie die Verkehrssituation durch das selbstfahrende Fahrzeug bewertet wird. Günstigerweise können hier Farben eingesetzt werden, die sich im Straßenverkehr als allgemein anerkannte Signale für gewisse Situationen durchgesetzt haben. Beispielsweise könnte die Farbe "Grün" dem Teilnehmer signalisieren, dass er von dem selbstfahrenden Fahrzeug erkannt wurde, die Situation daher im "grünen Bereich" liegt und der Teilnehmer keine Aktionen setzen muss. Die Farben "Gelb" oder "Orange" könnten dem Teilnehmer signalisieren, dass die Verkehrssituation gerade noch keine Gefahr birgt, dass aber eine Aktion des Verkehrsteilnehmers (z.B. stehenbleiben, abbremsen) erwartet wird. Die Farbe "Rot" könnte eine Gefahrensituation signalisieren, die sowohl seitens des Teilnehmers als auch seitens des selbstfahrenden Fahrzeugs Aktionen erfordert, um eine potentiell gefährliche Verkehrssituation oder einen Unfall zu verhindern.

Dabei kann es vorgesehen sein, dass der jeweils erfasste Verkehrsteilnehmer mittels einer Intensitätsmodulation der erzeugten Signallichtverteilung auf das selbstfahrende Fahrzeug aufmerksam gemacht wird. Die Intensitätsmodulation kann dabei Blinken, Blitzen, eine konstante Helligkeit mit überlagerten Blitzen oder eine Kombination davon umfassen. Die Intensitätsmodulation der erzeugten Signallichtverteilung stellt eine effiziente Maßnahme dar, um konkrete und unmittelbare Gefahren abwenden zu können.

Es kann auch vorgesehen sein, dass der Leuchtring dazu genutzt werden kann, Fahrtrichtungen anzuzeigen. Beispielsweise kann mit Hilfe der Leuchteinrichtungen des Leuchtrings ein Wischeffekt bei einer beabsichtigen Vorwärts- bzw. Rückwärtsbewegung des Fahrzeuges erzeugt werden.

Nachfolgend wird die Erfindung anhand von beispielhaften Zeichnungen näher erläutert. Hierbei zeigt
Fig. 1 einen Ausschnitt eines beispielhaften Kraftfahrzeuges mit einem Beleuchtungssystem, welches mehrere Leuchteinrichtungen umfasst, die horizontal umlaufend an dem Kraftfahrzeug angeordnet sind,
Fig. 2 eine beispielhafte Leuchteinrichtung in einer perspektivischen Ansicht,
Fig. 3 die beispielhafte Leuchteinrichtung aus Fig. 2 in einer perspektivischen Ansicht von unten,
Fig. 4A einen schematischen Querschnitt einer beispielhaften Leuchteinrichtung an einem Kraftfahrzeug,
Fig. 4B einen schematischen Querschnitt einer weiteren beispielhaften Leuchteinrichtung an einem Kraftfahrzeug,
Fig. 4C einen schematischen Querschnitt einer weiteren beispielhaften Leuchteinrichtung an einem Kraftfahrzeug,
Fig. 4D einen schematischen Querschnitt einer weiteren beispielhaften Leuchteinrichtung an einem Kraftfahrzeug, und
Fig. 4E einen schematischen Querschnitt einer weiteren beispielhaften Leuchteinrichtung an einem Kraftfahrzeug.

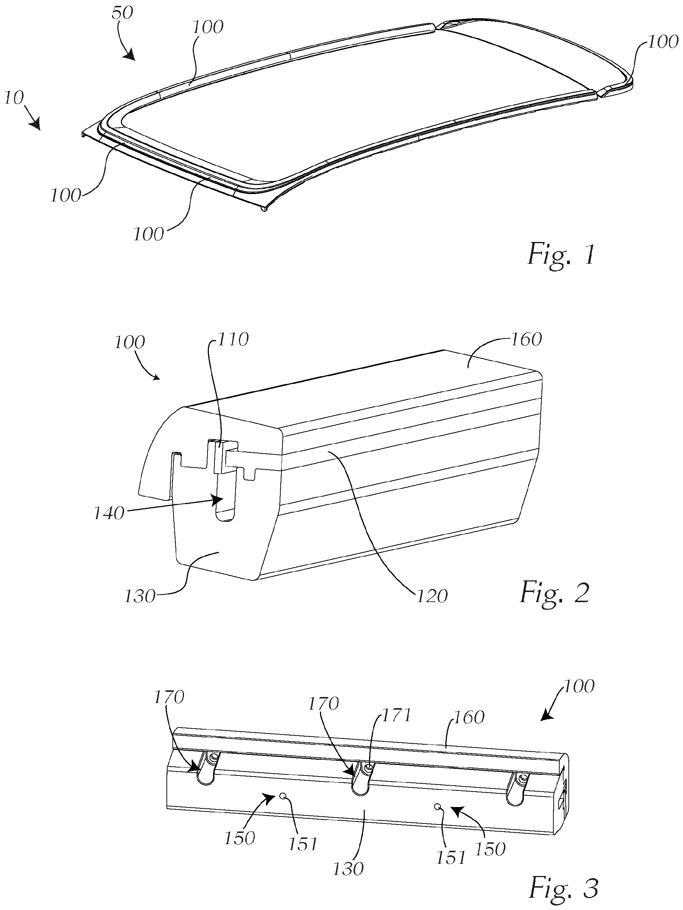

**Fig. 1** zeigt ein beispielhaftes Kraftfahrzeug **10,** welches in einem selbstfahrenden Zustand betreibbar ist, wobei das Kraftfahrzeug **10** ein adaptives Beleuchtungssystem **50** zum Erzeugen von adaptiven Lichtsignalbotschaften an einzelne Verkehrsteilnehmer umfasst, welches Beleuchtungssystem **50** mehrere Leuchteinrichtungen **100** und eine Steuereinrichtung zur Steuerung der Leuchteinrichtungen **100** umfasst. Die Leuchteinrichtungen **100** sind dabei derart um das Kraftfahrzeug **10** horizontal umlaufend angeordnet, dass bei gleichzeitiger Einschaltung jeder Leuchteinrichtung **100** die Streuoptiken **120** der Leuchteinrichtungen **100** als optisch durchgehend leuchtender Leuchtring wahrnehmbar sind.

Das Beleuchtungssystem **50** des beispielhaften Kraftfahrzeuges **10** ist ausgestaltet, dass die Lichtquelle **110** der Leuchteinrichtungen **100** durch die Steuereinrichtung angesteuert und aktiviert sind, wenn sich das Kraftfahrzeug in dem selbstfahrenden Zustand befindet. Ferner sind die Leuchteinrichtungen **100** unabhängig voneinander durch die Steuereinrichtung ansteuerbar.

Ferner kann das Kraftfahrzeug **10** zumindest eine Sensoreinrichtung umfassen, welche eingerichtet ist, in der Umgebung des Kraftfahrzeugs **10** befindliche Verkehrsteilnehmer jeweils einzeln zu erfassen und Änderungen der Relativposition zwischen dem Kraftfahrzeug **10** und den einzelnen Verkehrsteilnehmern zu berücksichtigen. Die Sensoreinrichtung kann dabei eine bildsensorgestützte Kamera, ein Nahfeld-Infrarotsensor oder ein Ultraschallsensor sein. Die Sensoreinrichtung kann bei Erfassen zumindest eines Verkehrsteilnehmers ein Signal an die Steuereinrichtung übermitteln, sodass die Steuereinrichtung jene Leuchteinrichtung bzw. Leuchteinrichtungen **100** ansteuert, welche dem zumindest einen erfassten Verkehrsteilnehmer am nächsten ist/sind.

Eine detaillierte Ansicht einer beispielhaften Leuchteinrichtung **100** ist in **Fig. 2** gezeigt, wobei die Leuchteinrichtung **100** eine Lichtquelle **110** umfasst, welche als LED oder mehrere LEDS auf einer Leiterplatte oder eine LED mit einem Lichtleiter ausgebildet sein kann.

Ferner umfasst die Leuchteinrichtung **100** eine der Lichtquelle **110** zugeordnete Streuoptik **120,** welche eingerichtet ist, das von der zumindest einen Lichtquelle **110** emittierbare Licht durch Brechung zu streuen, um einen diffusen Leuchteindruck der Streuoptik **120** zu ermöglichen.

Überdies umfasst die Leuchteinrichtung ein Trägerelement **130,** an welchem die Lichtquelle **110** angeordnet ist, wobei das Trägerelement **130** einen Kabelkanal **140** zur Führung zumindest einer elektrischen Leitung, welche die Lichtquelle **110** mit der Steuereinrichtung verbindet, und ein erstes Befestigungsmittel **150** zur Befestigung des Trägerelements **130** bzw. der Leuchteinrichtung **100** an dem Kraftfahrzeug. Das erste Befestigungsmittel **150** umfasst in dem gezeigten Beispiel Schrauben und zugehörige Bohrungsöffnungen **151,** wobei die Bohrungsöffnungen **151** an dem Trägerelement **130** angeordnet sind, über welche Bohrungsöffnungen **151** das Trägerelement **130** mittels der Schrauben an dem Kraftfahrzeug befestigbar ist, wobei das erste Befestigungsmittel **150** bzw. die Bohrungsöffnungen **151** in **Fig. 3** zu sehen sind.

Die Leuchteinrichtung **100** umfasst weiters eine Abdeckung **160,** welche mittels einem zweiten Befestigungsmittel **170** an dem Trägerelement **130** befestigbar ist, wobei die Abdeckung **160** in Kombination mit dem Trägerelement **130** in einem an dem Trägerelement 130 befestigten Zustand eingerichtet ist, die Streuoptik **120** zu halten.

Das zweite Befestigungsmittel **170** umfasst dabei Schrauben und zugehörige Bohrungsöffnungen **171,** wobei die Bohrungsöffnungen **171** an dem Trägerelement **130** angeordnet sind, über welche Bohrungsöffnungen **171** die Abdeckung **160** mittels der Schrauben an dem Trägerelement 130 befestigbar ist, wobei das zweite Befestigungsmittel **170** bzw. die Bohrungsöffnungen in **Fig. 3** zu sehen sind.

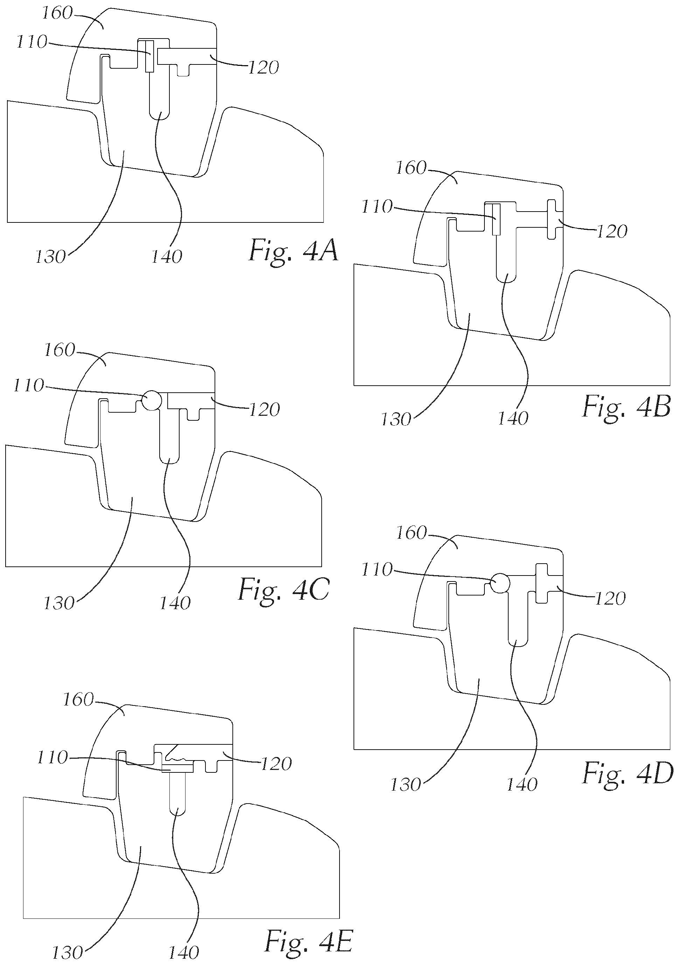

**Fig. 4A, 4B, 4C, 4D** und **4E** zeigen noch weitere Ausführungsbeispiele einer Leuchteinrichtung **100** in einer schematischen Querschnittsansicht. In Fig. **4A, 4B** und **4E** sind die Lichtquellen als LED auf einer Leiterplatte ausgebildet, wobei in Fig. **4E** die Streuoptik **120** zusätzlich eine Einkoppeloptik für das von der Lichtquelle emittierbare Licht aufweist, welche Einkoppeloptik beispielsweise als Kollimator ausgebildet ist, wobei das in den Kollimator eingekoppelte Licht über einen Umlenkbereich der Streuoptik aus der Streuoptik ausgekoppelt wird. Die LED bzw. die Leiterplatte mit der LED/LEDs ist dabei derart angeordnet, dass die Hauptabstrahlrichtung des emittierbaren Lichts in Richtung Abdeckung **160** bzw. in einem ordnungsgemäßen befestigten Zustand der Leuchteinrichtung an einem Kraftfahrzeug nach oben gerichtet ist.

Unter "Hauptabstrahlrichtung" ist die Richtung zu verstehen, in der die Leuchtdiode bzw. die Leuchtdioden infolge ihrer Richtwirkung am stärksten bzw. am meisten Licht abstrahlt/ abstrahlen.

**Fig. 4C** und **4D** zeigen Ausführungsbeispiele einer Leuchteinrichtung, bei welcher die Lichtquellen als Lichtleiter mit zumindest einer LED ausgebildet ist, in welchen Lichtleiter Licht der zumindest einen LED einspeisbar ist.

## Patentansprüche

1. Kraftfahrzeug (10), welches in einem selbstfahrenden Zustand betreibbar ist, wobei das Kraftfahrzeug ein adaptives Beleuchtungssystem (50) zum Erzeugen von adaptiven Lichtsignalbotschaften an einzelne Verkehrsteilnehmer umfasst, welches Beleuchtungssystem (50) zumindest eine Leuchteinrichtung (100) und eine Steuereinrichtung zur Steuerung der zumindest einen Leuchteinrichtung (100) umfasst,
**dadurch gekennzeichnet, dass**
die zumindest eine Leuchteinrichtung (100)
- zumindest eine Lichtquelle (110),
- zumindest einer der Lichtquelle (110) zugeordnete Streuoptik (120), welche eingerichtet ist, das von der zumindest einen Lichtquelle (110) emittierbare Licht durch Brechung zu streuen, um einen diffusen Leuchteindruck der Streuoptik (120) zu ermöglichen,
- ein Trägerelement (130), an welchem die zumindest eine Lichtquelle (110) angeordnet ist, wobei das Trägerelement (130) einen Kabelkanal (140) zur Führung zumindest einer elektrischen Leitung, welche die zumindest eine Lichtquelle (110) mit der Steuereinrichtung verbindet, und ein erstes Befestigungsmittel (150) zur Befestigung des Trägerelements (130) bzw. der Leuchteinrichtung (100) an dem Kraftfahrzeug umfasst,
- eine Abdeckung (160), welche mittels einem zweiten Befestigungsmittel (170) an dem Trägerelement (130) befestigbar ist, wobei die Abdeckung (160) in Kombination mit dem Trägerelement (130) in einem an dem Trägerelement (130) befestigten Zustand eingerichtet ist, die Streuoptik (120) zu halten, umfasst,
und wobei die zumindest eine Leuchteinrichtung (100) derart um das Kraftfahrzeug umlaufend angeordnet ist, dass bei Einschaltung der zumindest einen Leuchteinrichtung (100) die Streuoptik (120) als optisch durchgehend leuchtender Leuchtring wahrnehmbar ist.

2. Kraftfahrzeug nach Anspruch 1, **dadurch gekennzeichnet, dass** das Beleuchtungssystem (50) zumindest zwei oder mehrere Leuchteinrichtungen (100) umfasst, wobei die zumindest zwei oder mehreren Leuchteinrichtungen (100) derart um das Kraftfahrzeug umlaufend angeordnet sind, dass bei gleichzeitiger Einschaltung jeder Leuchteinrichtung (100) die Streuoptiken (120) der Leuchteinrichtungen (100) als optisch durchgehend leuchtender Leuchtring wahrnehmbar sind.

3. Kraftfahrzeug nach Anspruch 1 oder 2, **dadurch gekennzeichnet, dass** die zumindest eine Lichtquelle (110) als LED ausgebildet ist.

4. Kraftfahrzeug nach Anspruch 4, **dadurch gekennzeichnet, dass** die zumindest eine LED auf einer Leiterplatte angeordnet ist, welche Leiterplatte an dem Trägerelement (130) angeordnet ist.

5. Kraftfahrzeug nach Anspruch 1 oder 2, **dadurch gekennzeichnet, dass** die zumindest eine Lichtquelle (110) als Lichtleiter mit einer LED ausgebildet ist, in welchen Lichtleiter Licht der LED einspeisbar ist.

6. Kraftfahrzeug nach einem der Ansprüche 1 bis 5, **dadurch gekennzeichnet, dass** das erste Befestigungsmittel (150) Schrauben und zugehörige Bohrungsöffnungen (151) umfasst, wobei die Bohrungsöffnungen (151) an dem Trägerelement (130) angeordnet sind, über welche Bohrungsöffnungen (151) das Trägerelement (130) mittels der Schrauben an dem Kraftfahrzeug befestigbar ist.

7. Kraftfahrzeug nach einem der Ansprüche 1 bis 6, **dadurch gekennzeichnet, dass** das zweite Befestigungsmittel (170) Schrauben und zugehörige Bohrungsöffnungen (171) umfasst, wobei die Bohrungsöffnungen (171) an dem Trägerelement (130) angeordnet sind, über welche Bohrungsöffnungen (171) die Abdeckung (160) mittels der Schrauben an dem Trägerelement (130) befestigbar ist.

8. Kraftfahrzeug nach einem der Ansprüche 1 bis 7, **dadurch gekennzeichnet, dass** die zumindest eine Lichtquelle (110) der zumindest einen Leuchteinrichtung (100) durch die Steuereinrichtung angesteuert und aktiviert sind, wenn sich das Kraftfahrzeug in dem selbstfahrenden Zustand befindet.

9. Kraftfahrzeug nach einem der Ansprüche 2 bis 8, **dadurch gekennzeichnet, dass** die zumindest zwei oder mehreren Leuchteinrichtungen (100) unabhängig voneinander durch die Steuereinrichtung ansteuerbar sind.

10. Kraftfahrzeug nach einem der Ansprüche 1 bis 9, **dadurch gekennzeichnet, dass** das Kraftfahrzeug zumindest eine Sensoreinrichtung umfasst, welche eingerichtet ist, in der Umgebung des Kraftfahrzeugs befindliche Verkehrsteilnehmer jeweils einzeln zu erfassen und Änderungen der Relativposition zwischen dem Kraftfahrzeug und den einzelnen Verkehrsteilnehmern zu berücksichtigen.

11. Kraftfahrzeug nach Anspruch 10, **dadurch gekennzeichnet, dass** die zumindest eine Sensoreinrichtung eine bildsensorgestützte Kamera, ein Nahfeld-Infrarotsensor oder ein Ultraschallsensor ist.

12. Kraftfahrzeug nach Anspruch 10 oder 11, **dadurch gekennzeichnet, dass** die Sensoreinrichtung bei Erfassen zumindest eines Verkehrsteilnehmers ein Signal an die Steuereinrichtung übermittelt, sodass die Steuereinrichtung jene Leuchteinrichtung (100) ansteuert, welche dem zumindest einen erfassten Verkehrsteilnehmer am nächsten ist.
